Europäisches Patentamt

European Patent Office

Office européen des brevets

(19)

(11) Publication number: **0 129 331**
**A2**

(12) **EUROPEAN PATENT APPLICATION**

(21) Application number: **84303340.8**

(22) Date of filing: **17.05.84**

(51) Int. Cl.³: **G 01 L 1/22**

(30) Priority: **19.05.83 GB 8313834**

(43) Date of publication of application:
**27.12.84 Bulletin 84/52**

(84) Designated Contracting States:
**DE FR GB IT SE**

(71) Applicant: **TRW Probe Electronics Co. Ltd.**
**Phoenix Way**
**Cirencester Gloucestershire GL7 1YZ(GB)**

(72) Inventor: **Barnett, John David**
**The Rising**
**Needham Nr. Haleston Norfolk(GB)**

(74) Representative: **Lainé, Simon James et al,**
**Wynne-Jones, Lainé & James 22, Rodney Road**
**Cheltenham Gloucestershire. GL50 1JJ(GB)**

(54) **Strain-gauged transducers.**

(57) A strain transducer is adapted to measure strain at a chosen depth below the surface of a workpiece, such as at the neutral axis of a draft bar. The transducer has a hollow cylindrical plug (6) projecting from a co-axial shoulder (7) of slightly larger diameter, the distal end of the plug being force fitted with a disc-like diaphragm (9) on which strain gauges (10) are mounted. These are on the inside face, and connections (11) extend up inside the plug to encapsulated electronic circuitry at the proximal end. The workpiece is bored (3) to an extent greater than the chosen depth and then counterbored (4) to match the plug and shoulder, and the transducer is inserted with an interference fit.

FIG. 1.

EP 0 129 331 A2

Croydon Printing Company Ltd.

-1-

"Improvements Relating to Strain Transducers"

This invention relates to strain transducers and is a development of that described in British Patent No 2050624B.

In that Patent there is described a strain transducer primarily for measuring strains at the surface of a workpiece. A hole is drilled and a small cylindrical plug-like element inserted. This has a transverse diaphragm on which the strain gauges are mounted or deposited so that they lie coplanar with the surface of the workpiece when the plug is properly "home". However, it is often desired to measure strain at other points. In particular, it is frequently useful to know the strain on the neutral axis of a structural member, where one is concerned only with tension or compression and not with any bending forces. It is the aim of this invention to develop the strain transducer of the plug and diaphragm type to solve this problem.

According to one aspect of the present invention there is provided a strain transducer comprising a carrier member in the form of a generally cylindrical plug-like member for insertion with an interference fit into an opening in the surface of a structure to be monitored and and having a diaphragm spanning its distal end on which is secured at least one strain gauge, the face of the diaphragm on which the gauge is mounted being disposed substantially parallel or coplanar with the direction of strain to be measured.

Conveniently, the diaphragm is in the form of a disc which is force fitted into the open distal end of the tubular plug-like member. The strain gauge is mounted on it first, before fitting, on the side that will be concealed within the tubular plug, facing the proximal end. Electrical connections can be led up the inside of the cylinder to an electronic assembly which can be encapsulated on the proximal end of the plug, which remains exposed.

It will be understood that there can be more than one gauge on the same surface; indeed there will usually be at least two mutually at right angles.

Preferably, the plug-like member is of stepped configuration, with an elongated tubular stem projecting from an annular shoulder of larger diameter at the proximal end.

According to another aspect of the present invention there is provided a method of determining strain at a chosen depth below the surface of a workpiece, comprising drilling a transverse hole from the surface to a depth exceeding the chosen one, counterboring the mouth of the hole, and inserting the plug-like member of a strain transducer as defined above with an interference fit in said hole to an extent where the strain gauge face of the diaphragm is at the chosen depth.

For a better understanding of the invention, one embodiment will now be described, by way of example, with reference to the accompanying drawing, in which:

Figure 1 is an axial section of a strain transducer in a workpiece, and

Figure 2 is a similar axial section showing an adjustment of the transducer.

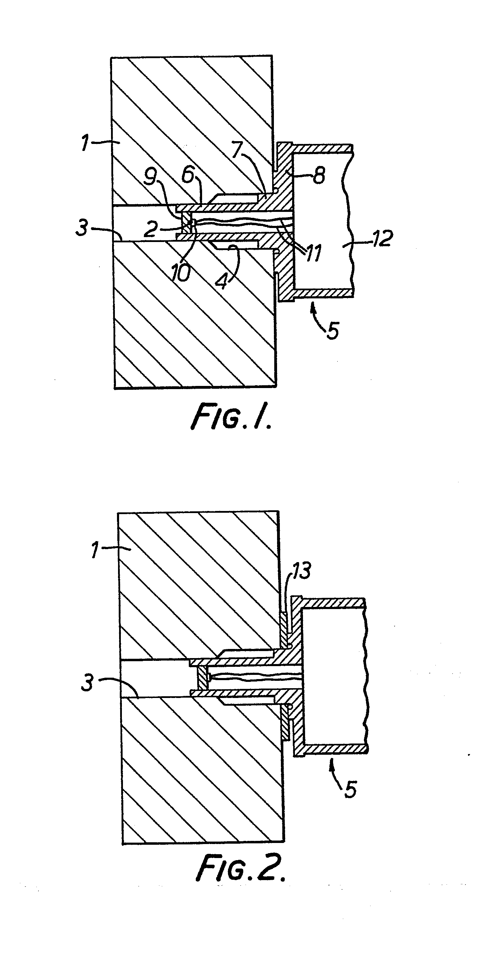

In Figure 1, a generally rectangular section member 1 is required to have its strain measured at its neutral axis 2. A bore 3 is drilled transversely through the member 1, and then a counterbore 4 is made, approaching but not right up to the neutral axis, from one side only.

The bore and counterbore match the dimensions of parts of a strain transducer 5. This has a cylindrical tubular stem 6 projecting co-axially from an annular shoulder 7 beneath a base plate 8. The stem is an interference fit in the bore 3, while the cylindrical surface of the shoulder 7 is a slightly lighter fit at the mouth of the counterbore 4.

Inserted with a force fit into the distal end of the stem is a diaphragm 9. This has strain gauges 10 deposited on it in mutually perpendicular orientations. Electrical wires 11 lead from the gauges up inside the stem to electronic equipment encapsulated in a compartment 12 on the base outside the member 1. The strain gauges are deposited and the leads attached before the diaphragm is press fitted into the tubular stem.

It will of course not always happen that the length of the plug-like member will bring the strain gauge surface of the diaphragm exactly onto the neutral axis. This can readily be adjusted by the use of shims 13 as illustrated in Figure 2.

In the figures, various dimensions have been exaggerated for clarity, particularly the diameter of the counterbore 4 in relation to that of the bore 3. Typical dimensions might be a 7 mm bore 3 and a 9 mm counterbore 4, while the depth of the neutral axis from the surface could be of the order of 15 mm.

A particular application of this strain gauge arrangement is to draft bars of agricultural tractors, when ploughing or engaged in other heavy duty operations. These tend to be subject to significant bending forces due to friction at pivots and poor alignment, and so measurement at the surface does not give a true indication of the draft bar tension.

## CLAIMS

1. A strain transducer comprising a carrier member in the form of a generally cylindrical plug-like member (6) for insertion with an interference fit into an opening (3) in the surface of a structure (1) to be monitored, and having a diaphragm (9) spanning its distal end on which is secured at least one strain gauge (10), the face of the diaphragm on which the gauge is mounted being disposed substantially parallel or coplanor with the direction of strain to be measured.

2. A strain stransducer as claimed in claim 1, wherein the diaphragm (9) is a disc force fitted into the open distal end of the tubular plug-like member (6).

3. A strain transducer as claimed in claim 1 or 2, wherein the or each strain gauge (10) is mounted on the side of the diaphragm facing the proximal end.

4. A strain transducer as claimed in claim 1,2 or 3, wherein there are two strain gauges (10) mutually at right angles.

5. A strain transducer as claimed in any preceding claim, wherein the plug-like member (6) has a stepped configuration, being of smaller outer diameter at the distal end than the proximal end (7).

6. A method of determining strain at a chosen depth below the surface of a workpiece (1), comprising drilling a transverse hole (3) from the surface to a depth exceeding the chosen one, counterboring the mouth of the hole, and inserting the plug-like member (6) of a strain transducer as claimed in claim 5 with an
interference fit in said hole to an extent where the
strain gauge face of the diaphragm (9) is at the chosen
depth.

0129331

FIG.1.

FIG.2.